# EUROPEAN PATENT APPLICATION

(11) **EP 1 699 034 A1**
(43) Date of publication of application: **06.09.2006**
(21) Application number: 04799751.5
(22) Date of filing: 12.11.2004
(51) Int. Cl.: G09G 3/20, G01R 31/28

(54) **DISPLAY DEVICE DRIVING APPARATUS, DISPLAY DEVICE, AND METHOD FOR TESTING DRIVING APPARATUS OR DISPLAY DEVICE**

(30) Priority: 25.12.2003 JP 2003428596
(71) Applicant: Test Research Laboratories Inc., Nagasaki-shi Nagasaki 851-0122 (JP)
(72) Inventor: TANAKA, Yoshito c/o Test Research Laboratories Inc, Nagasaki-shi, Nagasaki 851-0122 (JP); KATSU, Mitsunori c/o Test Research Lab. Inc., Nagasaki-shi, Nagasaki 851-0122 (JP)
(74) Representative: Vossius & Partner
(86) International application number: PCT/JP2004/017206
(87) International publication number: WO 2005/064583

(57) **Abstract**

There are included an analog signal output part (30) for outputting analog image signals to the respective ones of a plurality of image output terminals (1) ; a signal switch part (40) for sequentially selecting analog image signals from the analog signal output part (30); and a delta-sigma modulator (9) for delta-sigma modulating the analog image signals selected by the signal switch part (40) and for outputting a 1-bit digital modulated signal from a delta-sigma modulation output terminal (2). The delta-sigma modulator (9) converts the analog image signals outputted from the multiple image output terminals (1) to the 1-bit digital modulated signal, which can be extracted, as a test signal, from the delta-sigma modulation output terminal (2) to the exterior via a single wire.

## Description

### [Background of the Invention]

### [Field of the Invention]

The present invention relates to a drive device having a number of analog output terminals like an LSI, etc. for driving a display device such as a liquid crystal display device, an organic EL display device, a plasma display device, a surface electric field display, etc., a display device using the drive device, and a check method for a drive device or a display device.

### [Description of the Related Art]

Many display devices such as a liquid crystal device, an organic EL display device, a plasma display and a surface-conduction electron-emitter display (SED) respectively processes image data with an electronic circuit such as a drive circuit and outputs the processed data from a plurality of output terminals provided on the drive circuit to a display element. A drive transistor disposed so as to meet the respective output terminals of the drive circuit has no few variances in electric characteristics, therefore the variances occur in signal values outputted from the respective output terminals. Therefore, it is necessary to provide a check and evaluation device (test system) for measuring a relative error and an absolute error of a signal value outputted from each output terminal, and selecting a defective product.

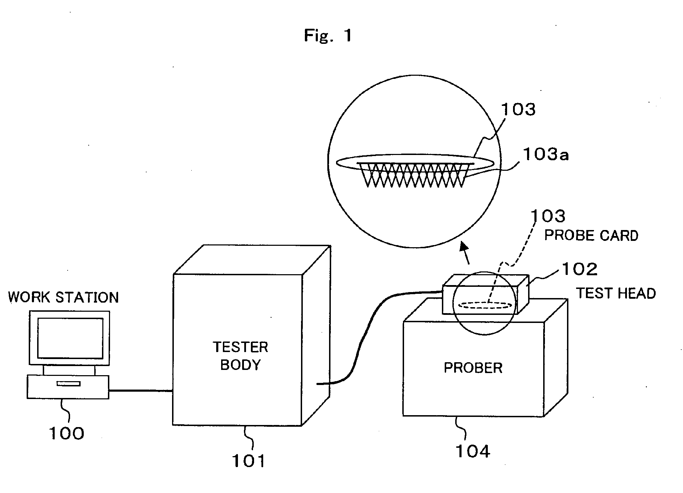

FIG. 1 is a view illustrating a frame configuration of a conventional test system. FIG. 1 illustrates a configuration example of the test system for checking and evaluating a drive LSI configured on a wafer. The test system roughly consists of a work station 100, a tester body 101, a test head 102, a probe card 103, and a prober 104. The probe card 103 is disposed with a plurality of needles 103a.

In a semiconductor circuit which outputs an image signal with multiple pins represented by a drive LSI of a display device, its quantity which permits simultaneous measurement of output values is limited to the quantity of the needles 103a of the probe card 103. Since test cost is proportional to test time per LSI, the test cost increases if the number of pins becomes larger than the number of the needles 103a. To restrain the test cost, the test system corresponding to the multiple pins for simultaneously measuring the output values of the multiple pins is required.

In the test system illustrated in FIG. 1, if the needles 103a of which quantity corresponds to that of output terminals (pins) of a drive LSI are arranged on the probe card 103, a measurement circuit or a signal output circuit can be used per pin of the drive LSI. However, in recent times, there are some probe cards 103 having the quantity of the needles 103a in excess of 1, 000 pins. In the case of 1, 000 pins, signals for 1,000 pins are exchanged between the tester body 101, the test head 102, and a probe card 103. Therefore, such a test system corresponding to multiple pins has a very large-scaled configuration.

With an advance of use of multiple pins and miniaturization of a drive LSI, a pitch between output terminals is further reduced, which makes it difficult to develop the probe card 103 having needles 103a corresponding to the narrow pitch, and to make a check itself, thus causing degradation in check reliability. If the probe card 103 corresponding to remarkably miniaturized pitches of the drive LSI cannot be manufactured, tests are required a plurality of times for one drive LSI, thus increasing test cost.

To avoid the above-mentioned inconveniences, there is a technology proposed for separately outputting signals outputted from a plurality of output terminals of a drive LSI externally from each check terminal provided for a predetermined number of output terminals (for example, Patent Document 1).
Patent Document 1: Japanese Patent No. 3199827

According to the Patent Document 1, there is a switch provided between a check terminal and a predetermined number of output terminals, and an image signal appearing at each output terminal is sequentially selected by a switch circuit and outputted to a check terminal. With this configuration, a check can be made using an image signal outputted from a check terminal without assigning a probe pin to all of a large number of output terminals. Therefore, an enormously large number of pins of a drive LSI can be appropriately processed.

However, according to the technology of the Patent Document 1, an output signal from a check terminal is an analog signal, and therefore an analog tester is required as a test device. As a result, there occurs a problem that a large test system is required. Furthermore, a noise component is easily included in an output signal, which makes it hard to perform high precision checks and evaluations.

It is also possible to convert an analog signal output from an output terminal into a digital signal using an A/D converter, and then output the digital signal from a check terminal. However, if the A/D converter is simply embedded in a drive circuit to convert an analog value into a digital value, a large number of signal lines are required, and also a large number of output terminals are required for an interface.

### [Summary of the Invention]

The present invention has been developed to solve the above-mentionedproblem, and an object of the present invention is to make high-precision checks and evaluations on electric characteristics of a drive LSI having output of an enormously large number of pins and a display device using it without providing a large test device such as an analog tester, etc. or without a large number of output terminals for an interface with an external test device.

To solve the above-mentioned problems, the drive device of the display device according to the present invention includes: an analog signal output part for generating an analog signal based on an input digital signal, and outputting the analog signal to each of the plurality of output terminals; a signal switch part which is connected to the plurality of output terminals and sequentially selects the analog signals outputted from the analog signal output part to the plurality of output terminals; and a delta-sigma modulation section for delta/sigmamodulating the analog signal selected by the signal switch part and outputting a 1-bit delta/sigma modulated digital signal to a check terminal.

Thus, in the drive device of the display device according to the present invention, the signal switch part leads an analog signal outputted to each output terminal to the delta-sigma modulation section. Using the delta-sigma modulation section, quantized noise can be suppressed and a very high precision measurement can be made. Since a signal outputted from a check terminal is a 1-bit digital modulated signal, it reduces the inconvenience of degrading the precision of a signal by noise as compared with the case of outputting an analog signal. Thus, high-precision checks and evaluations can be performed on a drive device.

Furthermore, there is only one wire (or a very small number of wires) to be provided on the output side of the delta-sigma modulation section, the characteristic of an analog signal can be checked and evaluated by connecting the delta-sigma modulation section to one check terminal (or a small number of check terminals) although there are a very large number of output terminals of analog signals. Therefore, an expensive probe card having a complicated configuration corresponding to an enormously large number of pins is not required. Also, a tester for receiving the 1-bit digital modulated signal can be a simplified digital tester for performing digital signal processing, and no large analog tester is required.

In addition, the test method using a drive device or a display device using the drive device according to the present invention includes: a test pattern inputting step of inputting a test pattern to the drive device; an analog signal acquiring step of sequentially switching a signal switch part connected to the plurality of output terminals of the drive device, and sequentially acquiring an analog signal generated based on the test pattern; a delta-sigma modulating step for delta-sigma modulating the analog signal acquired in the analog signal acquiring step; a delta-sigma modulated signal outputting step of outputting a 1-bit digital modulated signal generated in the delta-sigma modulating step from a check terminal to an external part; and a testing step of acquiring the 1-bit digital modulated signal outputted from the check terminal and checking or evaluating the signal.

Thus, by obtaining and externally outputting 1-bit digital modulated signals after delta-sigma modulating the analog signals outputted from the plurality of output terminals, a drive device having an enormously large number of pins can be checked and evaluated using a very small number of check terminals without assigning probe pins to a plurality of output terminals.

With the above-mentioned configuration of the present invention, a drive device having output of an enormously large number of pins and a display device using the drive device can be checked and evaluated with high accuracy electric characteristics using 1-bit digital modulated signals outputted from a small number of check terminals without using a large and complicated test device.

### [Brief Description of the Drawings]

FIG. 1 shows a configuration of a conventional test system;
FIG. 2 is a block diagram of the configuration of the liquid crystal display device according to an embodiment of the present invention;
FIG. 3 shows a configuration of a terminal provided for the drive device according to an embodiment of the present invention;
FIG. 4 is a block diagram showing an example of the circuit configuration of the drive device according to an embodiment of the present invention;
FIG. 5 shows a relationship between an input signal to the delta-sigma modulator and an output signal according to an embodiment of the present invention;
FIG. 6 shows an example of the configuration of the test system when a wafer having the drive device according to an embodiment of the present invention is checked and evaluated;
FIG. 7 shows an example of the configuration of the test system when the liquid crystal display device provided with the drive device according to an embodiment of the present invention is checked and evaluated;
FIG. 8 shows an example of the configuration of a built-in decimation filter in a simplified tester;
FIG. 9 is a block diagram of another example of the circuit configuration of the drive device according to an embodiment of the present invention; and
FIG. 10 is a block diagram of a further example of the circuit configuration of the drive device according to an embodiment of the present invention.

### [Detailed Description of the Preferred Embodiments]

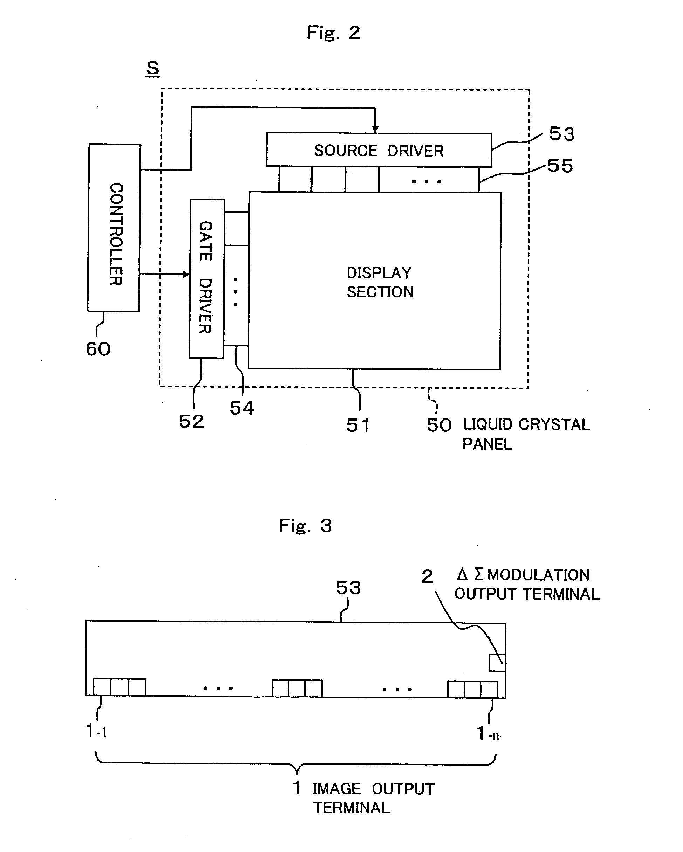

Reference will now be made in detail to embodiments of the present invention, examples of which are illustrated in the accompanying drawings. FIG. 2 is a block diagram illustrating a configuration of a liquid crystal display device S according to this embodiment. As illustrated in FIG. 2, the liquid crystal display device S according to this embodimentis constituted of a liquid crystal panel (a liquid crystal display element) 50 and a controller 60 for controlling a display of an image by the liquid crystal panel 50.

The liquid crystal panel 50 is constituted of a display section 51 formed with a pixel section in a matrix manner, a drive device (a gate driver LSI) 52 for a scanning signal wire and a drive device (a source driver LSI) 53 for an image signal wire. The drive devices 52, 53 are disposed on the identical substrate to the display section 51. On the display section 51, a plurality of scanning signal wires 54 and a plurality of image signal wires 55 orthogonal to the scanning signal wires 54 are disposed. At an a point of intersection thereof, a pixel section is disposed respectively. Ends of the scanning signal wires 54 and the image signal wire 55 are connected to output terminals of the drive devices 52, 53 respectively.

The controller 60 receives a display signal (an image signal), a clock signal, a timing signal, a horizontal synchronizing signal, a vertical synchronizing signal and so on from an external apparatus such as a personal computer, outputs a control signal to drive devices 52, 53 respectively, and outputs the display signal to the drive device 53. The drive devices 52, 53 operates based on these signals, and the drive device 53 supplies an analog image signal to each pixel section (a panel pixel group) of the liquid crystal panel 50 in accordance with a driving cycle of a scanning electrode by the drive device 52.

FIG. 3 is a view illustrating an arrangement of terminals of the drive device 53. As illustrated in FIG. 3, the drive device 53 includes a plurality of image output terminals 1 (1₋₁ to 1₋ₙ) for supplying an analog image signal to the external panel pixel group and the delta/sigma modulation output terminal (a check terminal) 2 for outputting a 1-bit digital modulation signal produced by applying delta/sigma modulation to the analog image signal to the outside of the drive device 53.

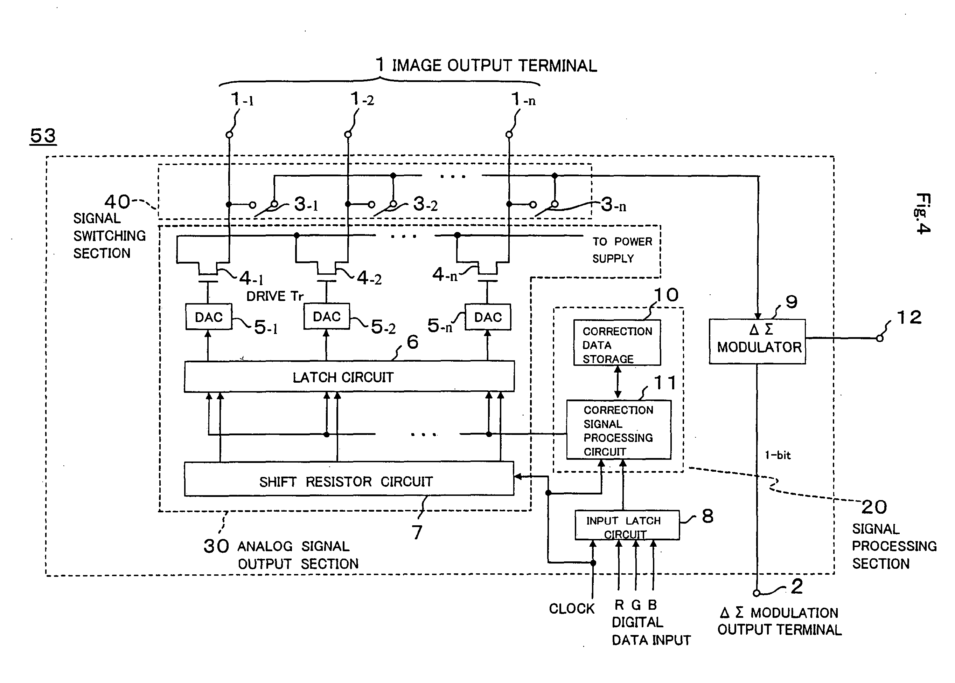

FIG. 4 is a block diagram illustrating a circuit configuration example of the drive device 53. As illustrated in FIG. 4, the drive device 53 is constituted of an input latch circuit 8, a delta/sigma modulator 9, a signal processing section 20, an analog signal output section 30 and a signal switching section 40. The drive device 53 configured in this way is packaged as a one-chip IC.

The input latch circuit 8 inputs a digital image signal displayed on the liquid crystal panel 50 and a clock signal. The signal processing section 20 corrects a digital image signal inputted from an input latch circuit 8. The signal processing section 20 is constituted of a correction data storage circuit 10 for storing correction data and a correction signal processing circuit 11 for correcting the digital image signal supplied from the input latch circuit 8 with correction data to output a digital correction signal.

The analog signal output section 30 receives a digital correction signal produced by the signal processing section 20, converting the digital correction signal into analog signal, and outputs the signal to an image output terminal 1. The analog signal output section 30 is constituted of a latch circuit 6 for storing a digital correction signal outputted from the correction signal processing circuit 11, being corresponding to a plurality of image output terminals 1₋₁ to 1₋ₙ, a shift register circuit 7, a plurality of D/A converters 5 (5₋₁ to 5₋ₙ) for D/A converting an output signal from the latch circuit 6, and a plurality of drive transistors 4 (4₋₁ to 4₋ₙ) for driving a data electrode of a liquid crystal panel element with the D/A converted analog image signal. This configuration may use a voltage follower circuit in place of the drive transistor 4.

Correction data stored in the correction data storage circuit 10 are used to correct variances in electrical characteristics of respective transistors, such as drive transistors 4₋₁ to 4₋ₙ and transistors for D/A converters 5₋₁ to 5₋ₙ, positioned in the drive device 53 and variances in electrical characteristics of the display section 51. Such correction data are constituted of a correction amount to be corrected for the digital image signal inputted into the input latch circuit 8. The correction signal processing circuit 11 reads out, from the correction data storage circuit 10, the data of the correction amount corresponding to the magnitude of a digital image signal supplied from the input latch circuit 8 and subtract the correction amount from the digital image signal to produce a digital correction signal.

The signal switching section 40 is connected between the analog signal output section 30 and the image output terminal 1. The signal switching section 40 consists of analog switches 3 (3₋₁ to 3₋ₙ) formed out of a plurality of transistors disposed so as to be corresponding to each of the respective image output terminals 1₋₁ to 1₋ₙ. The respective analog switches 3₋₁ to 3₋ₙ sequentially operate synchronously with a storage operation of a digital correction signal into the latch circuit 6 and sequentially selects analog image signals (potentials of the respective image output terminals 1₋₁ to 1₋ₙ) to the respective image output terminals 1₋₁ to 1₋ₙ from the analog signal output section 30 and outputs the signal to the delta/sigma modulator 9.

The delta/sigma modulator 9 is constituted of an integrator, a comparator, and a 1-bit D/A converter. An analog image signal sequentially supplied from the signal switching section 40 undergoes delta/sigma modulation at a predetermined clock speed, and the obtained 1-bit digital modulated signal is outputted from one output terminal to a delta/sigma modulation output terminal 2.

A clock interval of the delta/sigma modulator 9 is much smaller than a Nyquist interval and is much wider in a signal frequency band than an ordinary A/D converter. The delta/sigma modulator 9 according to this embodiment is configured so that a clock signal can be changed and set from a high speed to a low speed (however, much larger than the Nyquist interval) by inputting a control signal from an external control terminal 12. The clock speed of the delta/sigma modulator 9 uses an arbitrary value predetermined according to accuracy at the time of ordinary operation of the drive device 53.

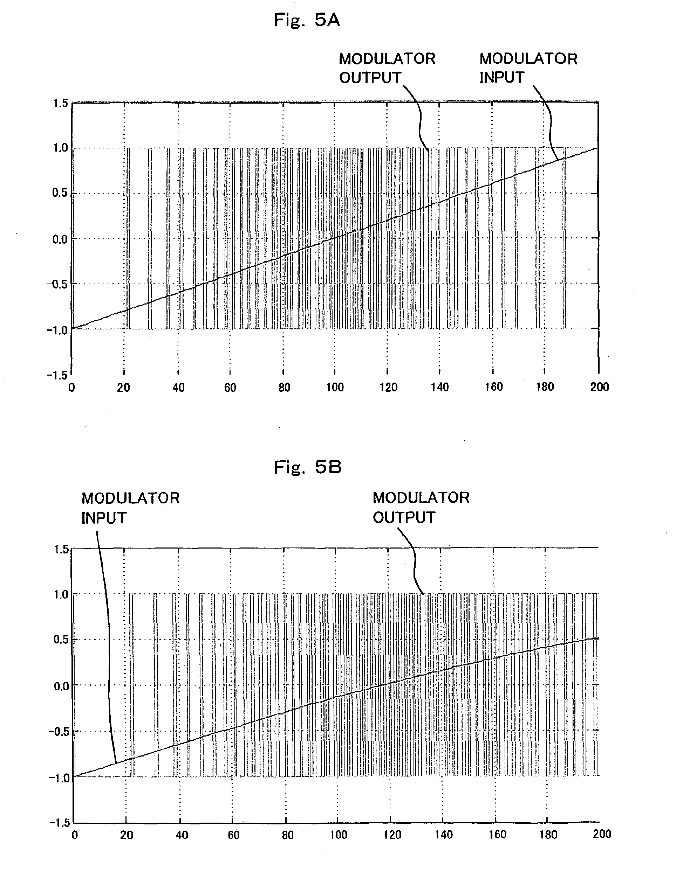

FIG. 5A and 5B are a view illustrating a relationship between an input signal and an output signal into/from the delta/sigma modulator 9. In FIG. 5A, the input signal is an analog voltage roughly linearly changing over time. The input signal indicates a signal inputted into the delta/sigma modulator 9 in a case where variance in electrical characteristics existing in the drive device 53 or the display section 51 is small, or a case where the variance in electrical characteristics existing in the drive device 53 or the display section 51 is significantly corrected. On the other hand, the input signal illustrated in FIG. 5B indicates a case where variance in electrical characteristics existing in the drive device 53 or the display section 51 occurs, thereby yielding nonlinear characteristics.

Between a case where an ideal signal without strains is inputted into the delta/sigma modulator 9 and a signal with nonlinear strains is inputted, a completely different 1-bit digital modulated signal is outputted from the delta/sigma modulator 9. Therefore, the analog image signals outputted from a plurality of image output terminals 1₋₁ to 1₋ₙ are delta-sigma modulated by the delta-sigma modulator 9 and the obtained 1-bit digital modulated signals are fetched from the delta-sigma modulation output terminal 2 to an external part, thereby checking and evaluating the drive device 53 and the display section 51.

There is next shown the operation of the drive device 53 according to this embodiment configured as described above. A digital image signal and a clock signal supplied from the controller 60 are inputted into the input latch circuit 8 and stored. The digital image signal stored in the input latch circuit 8 is transmitted to the correction signal processing circuit 11 in synchronization with the clock signal.

In the correction signal processing circuit 11, digital image signal correction is performed, being corresponding to the respective image output terminals 1₋₁ to 1₋ₙ, using the correction data stored in correction data storage circuit 10, thus producing a digital correction signal. The shift register circuit 7 sequentially output a pulse to the latch circuit 6 based on a clock signal and a shift start signal (not illustrated). The digital correction signal is sequentially stored in the latch circuit 6 in accordance with the pulse output and is distributed to each of the image output terminals 1₋₁ to 1₋ₙ, being compatible therewith.

The digital correction signal outputted from the latch circuit 6 is made into an analog image signal through the D/A converters 5₋₁ to 5₋ₙ and the drive transistors 4₋₁ to 4₋ₙ, and the analog image signal is outputted from the image output terminals 1₋₁ to 1₋ₙ to the respective pixel sections of the display section 51. During the normal operation other than during the check, the delta-sigma modulator 9 is not operating, and all analog switches 3₋₁ to 3₋ₙ of the signal switch part 40 are in the non-selected state.

In checking and evaluating a drive device 53 and the display section 51, an analog image signal outputted into the image output terminals 1₋₁ to 1₋ₙ is sequentially selected by the analog switches 3₋₁ to 3₋ₙ of the signal switching section 40 and is outputted to the delta/sigma modulator 9. The delta/sigma modulator 9 makes an analog image signal sequentially supplied from the signal switching section 40 undergo delta/sigma modulation, and the obtained 1-bit digital modulated signal is outputted to the delta/sigma modulation output terminal 2.

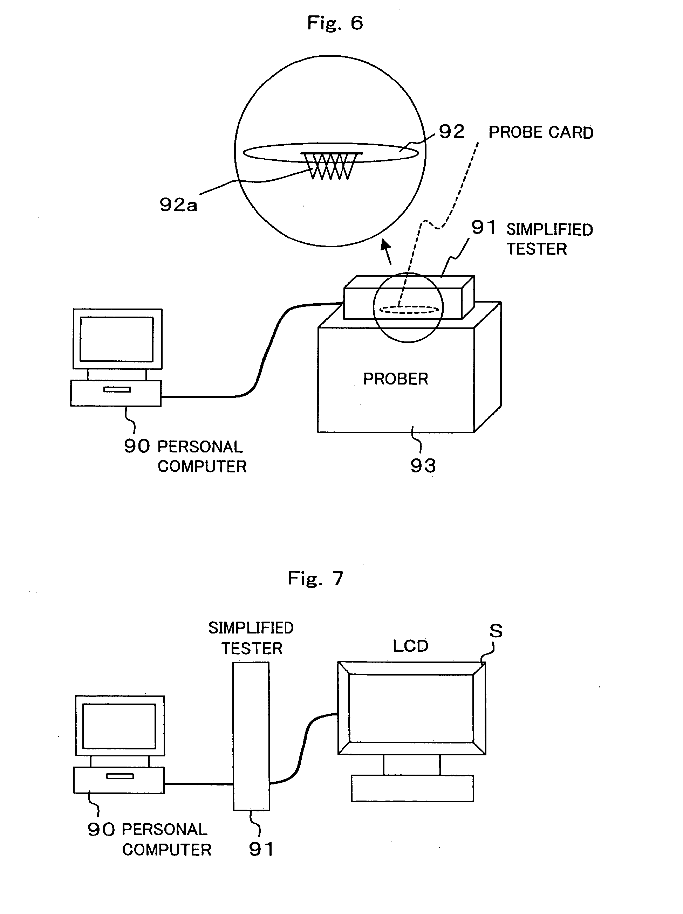

Check and evaluation of the drive device 53 itself are performed with the drive device 53 not mounted on the liquid crystal display device S (with the image output terminal 1 in an open state). For example, with an LSI of the drive device 53 composed on a wafer, the wafer is checked and evaluated. FIG. 6 is a view illustrating a configuration example of a test system in checking and evaluating a wafer.

The test system illustrated in FIG. 6 is constituted of a personal computer 90 for performing data processing, a digital type of simplified tester 91, a probe card 92, and a prober 93. The simplified tester 91 is constituted of, for example, a digital oscilloscope or a logic analyzer with a smaller measurement jitter than a clock cycle of the delta/sigma modulator 9.

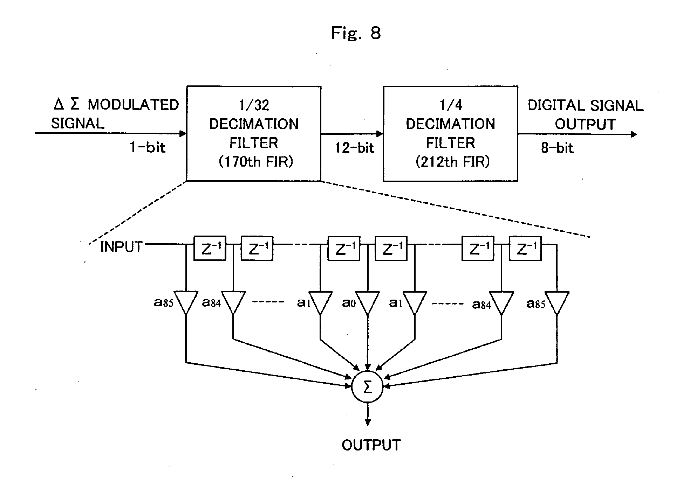

The simplified tester 91, fitted with decimation filter, demodulates an inputted 1-bit digital modulated signal into a digital signal of predetermined number of bits (equivalent to a digitalized output voltage of the image output terminal 1) by means of decimation processing. The decimation processing can remove quantization errors and provides remarkably highly accurate digital voltage value. The decimation filter is constituted of, for example, an FIR filter as illustrat in FIG. 8. A configuration for performing the decimation processing is not limited to this configuration and may use a DSP (Digital Signal Processor) or another similar configuration.

In checking and evaluating the drive device 53 using a test system configured in this way, some terminals including the delta/sigma modulation output terminal 2 are connected to a needle 92a of the probe card 92. In addition, the correction data for correction of an error due to the electric characteristic variances in each transistor in the drive device 53 is prepared, externally inputted, and written to the correction data storage circuit 10.

First, a predetermined test pattern is inputted through the input latch circuit 8 of the drive device 53. A digital image signal of a test pattern inputted into the input latch circuit 8, after being corrected by the correction data in the signal processing section 10, is converted into an analog image signal by the D/A converter 5. The analog image signal is inputted into the delta/sigma modulator 9 through the drive transistor 4 and the signal switching section 40. A 1-bit digital modulated signal produced here is outputted into the simplified tester 91 from the delta/sigma modulation output terminal 2.

The simplified tester 91 can receive a 1-bit digital modulated signal outputted from the delta/sigma modulation output terminal 2 through the probe card 92. The simplified tester 91 displays a pulse waveform of the 1-bit digital modulated signal inputted from the delta/sigma modulation output terminal 2 through the probe card 92 so as to be observed on a display unit. Moreover, digital signal processing such as demodulation processing is applied to the pulse waveform to measure the demodulated digital voltage value.

At this time, if the measured voltage value is deviated from a voltage value to be outputted (a voltage value of a test pattern) by at least a predetermined value (if correction is not sufficiently performed by correction data), the drive device 53 is determined as an inferior component. When it is within a correctable range even if the measured voltage value deviates, the drive device 53 is determined to be usable. The delta/sigma modulator 9 itself may have some malfunction, however, a delta/sigma modulated signal is not outputted or a waveform pulse abnormally goes wrong. So observation of such states indicates whether or not the drive device 53 should be handled as an inferior component.

An example illustrated in FIG. 6 can make a check and evaluation with the probe card 92 having needles of a very small amount per drive LSI (10 needles in this case) without need for use of a probe card having a large amount of needles being used in a conventional test system. Checking a short/open of an electric wiring, a resistance value, capacitance value, transistor characteristics and so on can be performed using outputs from one delta/sigma modulation output terminal 2 without using outputs from the large amount of image output terminals 1.

According to this embodiment, a check and evaluation of analog image signals of super-multiple pins can be performed with a 1-bit digital signal line. Because a signal to be handled is a digital signal, a check and evaluation can be made with a very simplified tester 91 and a personal computer 90 without need for an analog type tester. The digital signal outputted from the delta-sigma modulation output terminal 2 can be constituted such that it can be inputted to the simplified tester 91 in series or parallel depending on the specification of the drive device 53.

Checking and evaluating the drive device 53 can be performed with the drive device 53 mounted on the liquid crystal display device S. When the drive device 53 is mounted on the liquid crystal display device S, an error caused by variance in electrical characteristics of TFT transistors and capacitances provided in the display section 51 connected to the image output terminal 1 of the drive device 53 is reflected into a analog image signal. Accordingly, by fetching, as a check signal, a 1-bit digital modulated signal obtained by applying delta/sigma modulation to the analog image signal with the delta/sigma modulator 9, the display section 51 can be also checked and evaluated.

FIG. 7 is a view illustrating a configuration example of a test system in checking and evaluating the liquid crystal display device S mounted with the drive device 53. In checking and evaluating the liquid crystal display device S, correction data for correcting errors caused by variances in electrical characteristics of respective transistors within the drive device 53 as well as variances in electrical characteristics of TFT transistors or capacitances within the display section 51 are generated in advance and stored in the correction data storage circuit 10 of the drive circuit 53.

As illustrated in FIG. 7, checking and evaluating the liquid crystal display device S can be performed using the simplified tester 91 and the personal computer 90. A 1-bit digital modulated signal produced by thedelta/sigma modulator 9 when a test pattern is inputted into the input latch circuit 8 needs only to be inputted into the simplified tester 91 from the delta/sigma modulation output terminal 2. At this time, if a voltage value to be measured based on the 1-bit digital modulated signal in the simplified tester 91 deviates from a voltage value to be originally outputted beyond a predetermined value, the liquid crystal display device S is determined as an inferior component. Even if the measured voltage value deviates, the liquid crystal display device S is determined as be usable when the deviation is within a correctable range.

With the drive device 53 mounted on the liquid crystal display device S as illustrated in FIG. 7, for example, by producing a pulse signal with the signal processing section 20 and outputting the pulse signal to the image output terminal 1 through the latch circuit 6, the D/A converter 5 and the drive transistor 4, the pixel capacitance of the display section 51 can be measured. By giving a pulse signal to the image output terminal 1 and measuring transient characteristics thereof with the delta/sigma modulator 9, variance in a product (time constant) of the capacitance and resistance in the display section 51 connected to the respective image output terminals 1₋₁ to 1₋ₙ can be measured. In this case, if an time interval to be measured is short, a clock speed of the delta/sigma modulator 9 is changed.

Substantially as described above, the drive device 53 according to this embodiment can convert each of analog image signals outputted from the plurality of image output terminals 1₋₁ to 1₋ₙ into a 1-bit digital modulated signal with the delta/sigma modulator 9, and can output the converted signal to the delta/sigma modulation output terminal 2 by only one electric wire. Thus, a smaller number of wirings can reduce manufacturing cost and undersize the drive device 53.

This embodiment can improve check accuracy. That is, for the number of the needles of the probe card, the number of the needles corresponding to the number of several output pins including the delta/sigma modulation output terminal 2 is sufficient. This permits to increase a pitch of the probe pin and complete connection to the delta/sigma modulation output terminal 2. Furthermore, a signal outputted from the delta/sigma modulation output terminal 2 is a digital signal, which can reduce a disadvantage of signal accuracy being degraded more significantly than a case where an analog signal is outputted, thus performing highly accurate check and evaluation.

When the delta-sigma modulator 9 is simply replaced with an A/D converter in the configuration of the drive device 53, and its digital output is provided for the delta-sigma modulation output terminal 2, the precision of the check signal outputted from the delta-sigma modulation output terminal 2 is fixed by the precision of the A/D converter. In contrast to this, the drive device 53 of the present embodiment uses the delta-sigma modulator 9 and the settings of the clock speed can be changed. Therefore, a high-precision check signal can be obtained without the restrictions of the number of bits of the A/D converter.

That is, by changing the clock speed of the delta-sigma modulator 9, an external test device can detect a precision-dependent 1-bit digital modulated signal. When the drive device 53 and the display section 51 are checked and evaluated, the settings of the clock speed of the delta-sigma modulator 9 can be changed depending on the check precision. By setting a speed for the clock speed of the delta-sigma modulator 9 to high, the time resolution can be enhanced and the S/N ratio of the correction signal can be improved.

Furthermore, this embodiment can simplify a structure of the check apparatus. That is, for the number of the needles of the probe card, as described above, the number of the needles corresponding to the number of several output pins including the delta/sigma modulation output terminal 2 is sufficient. A signal outputted from the delta/sigma modulation output terminal 2 is a digital signal, which can simplify measures against signal degradation and noises and eliminate need for a large-scaled a check apparatus consisting of an expensive analog tester.

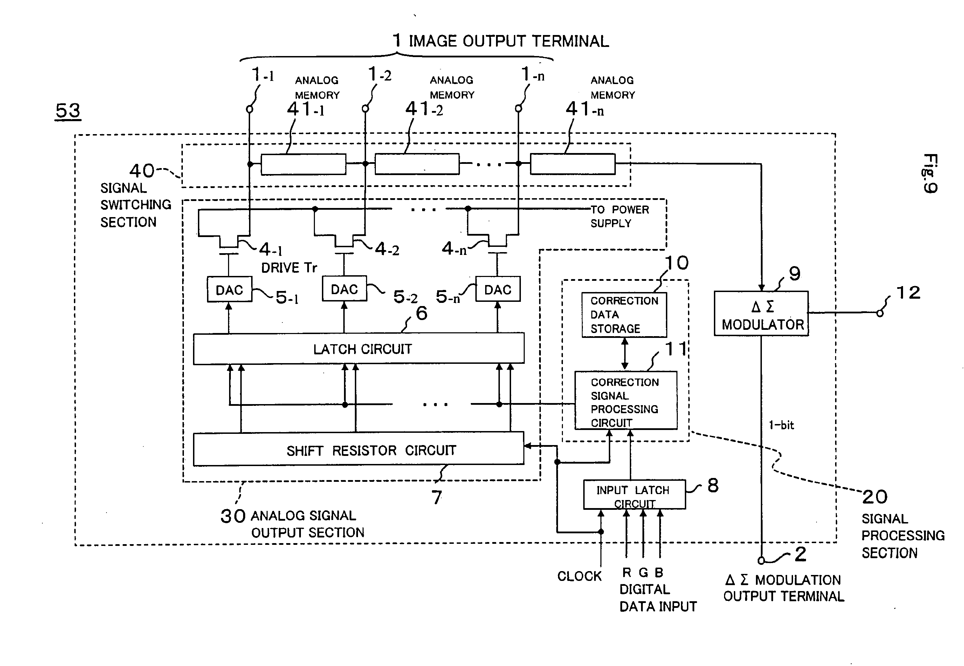

The embodiment described above explains an example using the analog switch 3 constituted of a transistor and so on as the signal switching section 40, but is not limited to the example. For example, as illustrated in FIG. 9, an analog memory 41 (41₋₁ to 41₋ₙ) may be used as the signal switching section 40. This permits an analog image signal outputted from the respective image output terminals 1₋₁ to 1₋ₙ to be selectively inputted into the delta/sigma modulator 9. In this case, a voltage follower circuit may be also used in place of the drive transistors 4 (4₋₁ to 4₋ₙ).

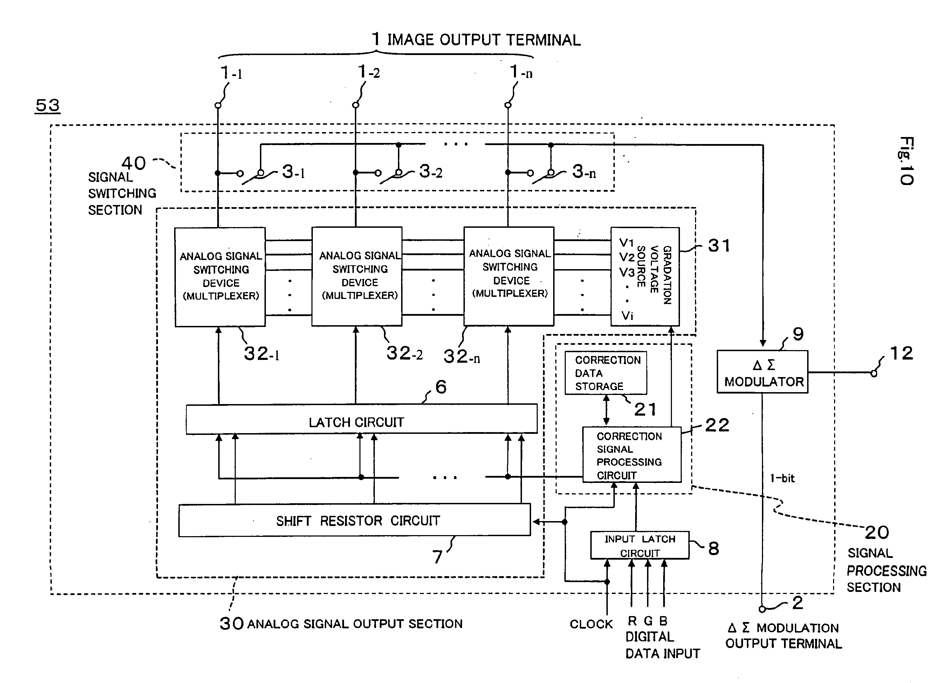

In the foregoing embodiment, an output from the latch circuit 6 is outputted to the image output terminal 1 through the D/A converter 5 and the drive transistor 4, but is not limited to the example. For example, as illustrated in FIG. 10, an analog image signal may be outputted to the image output terminal 1 through a plurality of analog signal switching devices (multiplexers) 32 (32₋₁ to 32₋ₙ) connected to the gradation voltage source 31.

In the case where the drive device 53 is constructed, D/A conversion using the gradation voltage source 31 and the analog signal switching device 32 is performed as follows. That is, a digital image signal inputted into the input latch circuit 8 is transmitted to the correction signal processing circuit 22, where correction is made based on correction data stored in the correction data storage circuit 21, and the corrected digital signal is then outputted to the latch circuit 6. From the latch circuit 6, the corrected digital signal is outputted to analog signal switching devices 32₋₁ to 32₋ₙ in accordance with the respective image output terminals 1₋₁ to 1₋ₙ. The gradation voltage of a value corresponding to the corrected digital signal is supplied from the gradation voltage source 31 to analog signal switching devices 32₋₁ to 32₋ₙ and is outputted to the image output terminals 1₋₁ to 1₋ₙ.

In the case of the example shown in FIG. 10, the correction data storage circuit 21 stores the correction data for correction of an error due to the variances in each of the gradation voltages V₁ to Vᵢ of the gradation voltage source 31, and the correction data for correction of the error due to the variances in each of the analog signal switching devices 32₋₁ to 32₋ₙ. The correction signal processing circuit 22 corrects the variances in the gradation voltages V₁ to Vᵢ and corrects the variances among the image output terminals 1₋₁ to 1₋ₙ for the digital image signal provided from the input latch circuit 8.

Furthermore, in the foregoing embodiment, there is an example in which the embodiment is applied to the voltage drive type liquid crystal display S, but the embodiment may be applied to a current drive type organic EL display device. Also, the embodiment may be applied to other display devices such as a plasma display and surface-conduction electron-emitter display (SED).

As many apparently widely different embodiments of the present invention can be without departing from the spirit and scope thereof, it is to be understood that the invention is not limited to the specific embodiments thereof except as defined in the appended claims.

### [Industrial Applicability]

The present invention is applicable to a display device drive device having a great many analog output terminals like LSI for driving a display device such as a liquid crystal device, an organic EL display device, a plasma display and a surface-conduction electron-emitter display (SED), a display device using the drive device and a check method for the drive device or display device.

## Claims

1. A drive device of a display device having a plurality of output terminals and outputting analog signals from the plurality of output terminals, comprising:
an analog signal output part for generating an analog signal based on an input digital signal, and outputting the analog signal to each of the plurality of output terminals;
a signal switch part which is connected to the plurality of output terminals and sequentially selects the analog signals outputted from the analog signal output part to the plurality of output terminals; and
a delta-sigma modulation section for delta/sigma modulating the analog signal selected by the signal switch part and outputting a 1-bit delta/sigma modulated digital signal to a check terminal.

2. The drive device of the display device according to claim 1, wherein the delta-sigma modulation section is constituted such that settings of a clock speed can be changed.

3. The display device provided with the drive device according to claim 1.

4. The display device provided with the drive device according to claim 2.

5. A test method for a drive device outputting analog signals from a plurality of output terminals, or for a display device provided with the drive device, comprising:
a test pattern inputting step of inputting a test pattern to the drive device;
an analog signal acquiring step of sequentially switching a signal switch part connected to the plurality of output terminals of the drive device, and sequentially acquiring analog signals generated based on the test pattern;
a delta-sigma modulating step for delta-sigma modulating the analog signals acquired in the analog signal acquiring step;
a delta-sigma modulated signal outputting step of outputting a 1-bit digital modulated signal generated in the delta-sigma modulating step from a check terminal to an external part; and
a testing step of acquiring the 1-bit digital modulated signal outputted from the check terminal and checking or evaluating the signal.
